# EUROPEAN PATENT APPLICATION

(11) **EP 4 411 581 A1**
(43) Date of publication of application: **07.08.2024**
(21) Application number: 22876037.7
(22) Date of filing: 22.09.2022
(51) Int. Cl.: G06F 21/60, H04L 9/32

(54) **INFORMATION PROCESSING PROGRAM AND INFORMATION PROCESSING DEVICE**

(30) Priority: 28.09.2021 JP 2021157363
(71) Applicant: Double Jump.tokyo Inc., Tokyo, 160-0023 (JP)
(72) Inventor: UENO, Hironobu, Tokyo 107-0062 (JP); MANZOKU, Ryo, Tokyo 171-0021 (JP); AOKI, Hirohumi, Tokyo 142-0063 (JP)
(74) Representative: Witthoff Jaekel Steinecke Patentanwälte PartG mbB
(86) International application number: PCT/JP2022/035390
(87) International publication number: WO 2023/054170

(57) **Abstract**

An information processing program and an information processing device for obtaining agreement on broadcast transmission prior to the broadcast transmission are provided. An information disclosure management server 1 includes: data reception means 100 for receiving, from an applicant 6a, disclosure data 111 to be broadcast; approval means 101 for receiving, from one or more approvers 6b, approval for broadcast transmission of the disclosure data 111; and disclosure means 103 for determining, in response to a disclosure request received from an executer 6c, whether the one or more approvers 6b who have approved the broadcast transmission based on approval information 112 satisfy a predetermined condition, and broadcasting the disclosure data 111 when the predetermined condition is satisfied.

## Description

### Technical Field

The present invention relates to an information processing program and an information processing device.

### Background Art

An information disclosure management system for efficiently leaving evidence of agreement in a blockchain even for a large number of people while holding a form of one electronic signature for one transaction has been proposed as a conventional technique (see, for example,

### Patent Literature 1).

According to an information disclosure management system disclosed in Patent Literature 1, a plurality of devices are each configured to: store in a storage unit a blockchain including transactions broadcast to a network; monitor whether the blockchain stored in the storage unit includes a transaction to a shared address for an agreement to be made; generate, when detecting the transaction to the shared address for the agreement, a transaction to the shared address for the agreement, the transaction including evidence whether to reach the agreement and a user's electronic signature; and broadcast the generated transaction to the network.

### Citation List

### Patent Literature

Patent Literature 1: JP 2017-220710 A

### Summary of Invention

### Technical Problem

According to the foregoing information disclosure management system, the plurality of devices reach agreement on the transactions which have already been broadcast. However, the foregoing information disclosure management system is not directed at broadcasting a transaction on which the plurality of devices have reached agreement. In other words, there is a problem that it is possible to agree to a transaction; however, it is impossible to agree to broadcast the transaction.

An object of the present invention is to provide an information processing program and an information processing device for obtaining agreement on broadcast transmission prior to the broadcast transmission.

### Solutions to Problem

In order to achieve the foregoing object, one aspect of the present invention provides the following information processing program and information processing device.

[1] An information disclosure management program for causing a computer to function as:
   reception means for receiving, from a first user, data to be broadcast;
   approval means for receiving, from one or more second users, approval for broadcast transmission of the data; and
   disclosure means for determining, in response to a disclosure request received from a third user, whether the one or more second users who have approved the broadcast transmission satisfy a predetermined condition, and broadcasting the data when the predetermined condition is satisfied.
[2] The information disclosure management program according to [1], causing the computer to further function as
   signature means for requesting the third user to affix a signature to the data and receiving, from the third user, the data to which the signature has been affixed.
[3] The information disclosure management program according to [1] or [2], wherein
   the first user, the one or more second users, and the third user are identical to each other.
[4] The information disclosure management program according to [1] or [2], wherein
   the one or more second users and the third user are identical to each other.
[5] An information disclosure management device including:
   reception means for receiving, from a first user, data to be broadcast;
   approval means for receiving, from one or more second users, approval for broadcast transmission of the data; and
   disclosure means for determining, in response to a disclosure request received from a third user, whether the one or more second users who have approved the broadcast transmission satisfy a predetermined condition, and broadcasting the data when the predetermined condition is satisfied.
[6] An information disclosure management system including:
   a first terminal to be operated by a first user;
   one or more second terminals to be operated by one or more second users;
   a third terminal to be operated by a third user; and
   an information disclosure management device including
   reception means for receiving, from the first user, data to be broadcast,
   approval means for receiving, from the one or more second users, approval for broadcast transmission of the data, and
   disclosure means for determining, in response to a disclosure request received from the third user, whether the one or more second users who have approved the broadcast transmission satisfy a predetermined condition, and broadcasting the data when the predetermined condition is satisfied.

### Advantageous Effects of Invention

According to the invention of claim 1, 5, or 6, it is possible to obtain agreement on broadcast transmission prior to the broadcast transmission.

According to the invention of claim 2, it is possible to request the third user to affix a signature to data, and it is possible to receive from the third user the data to which the signature has been affixed.

According to the invention of claim 3, it is possible to obtain agreement on broadcast transmission prior to the broadcast transmission even in a case where the first user, the one or more second users, and the third user are identical to each other.

According to the invention of claim 4, it is possible to obtain agreement on broadcast transmission prior to the broadcast transmission even in a case where the one or more second users and the third user are identical to each other.

### Brief Description of Drawings

Fig. 1 is a schematic diagram illustrating an example of a configuration of an information processing system according to an embodiment.
Fig. 2 is a block diagram illustrating a configuration example of an information processing device according to the embodiment.
Fig. 3 is a schematic diagram illustrating a configuration example of approval information 112.
Fig. 4 is a schematic diagram illustrating a configuration example of disclosure rule information 113.
Fig. 5 is a flowchart illustrating an operation example according to the embodiment.
Fig. 6 is a schematic diagram illustrating a configuration example of user information.

### Description of Embodiments

### [Embodiment]

### (Configuration of information processing system)

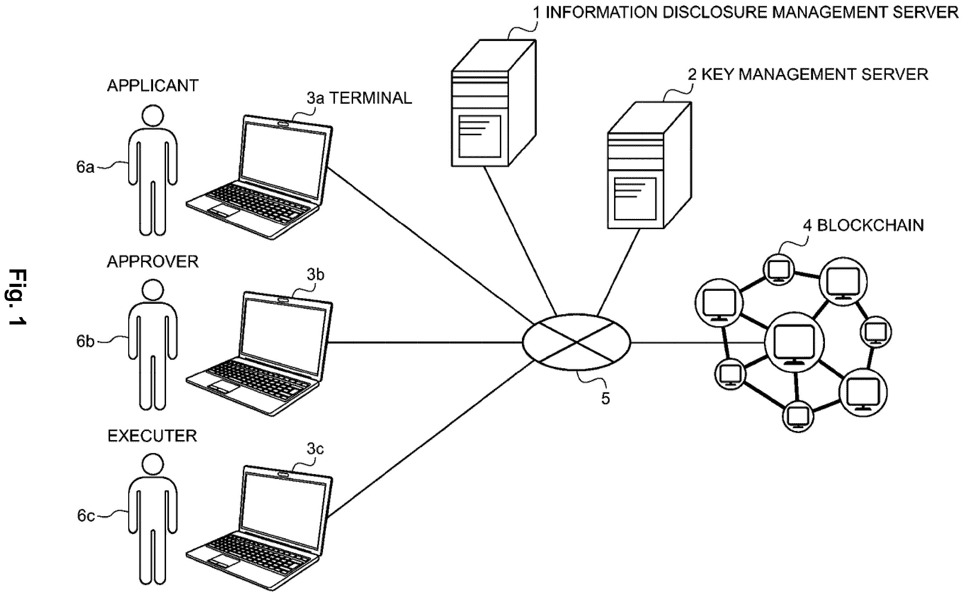

Fig. 1 is a schematic diagram illustrating an example of a configuration of an information processing system according to an embodiment.

This information processing system includes an information disclosure management server 1, a key management server 2, terminals 3a, 3b, and 3c, a blockchain 4, and a network 5. The information disclosure management server 1 is an example of an information processing device. The terminal 3a is operated by an applicant 6a. The applicant 6a is an example of a first user. The terminal 3b is operated by an approver 6b. The approver 6b is an example of a second user. The terminal 3c is operated by an executer 6c. The executer 6c is an example of a third user. The information disclosure management server 1, the key management server 2, the terminals 3a, 3b, and 3c, and the blockchain 4 are connected to each other via the network 5 so as to be capable of communicating with each other. The applicant 6a is a person who requests approval for broadcast transmission of data to the blockchain 4. The approver 6b is a person who approves the broadcast transmission of the data requested by the applicant 6a. The executer 6c is a person who affixes a signature to the data and executes broadcast transmission of the data to which the signature has been affixed.

The information disclosure management server 1 is an information processing device of a server type. The information disclosure management server 1 operates in accordance with an instruction from each of the terminals 3a, 3b, and 3c. The information disclosure management server 1 includes electronic components, such as a central processing unit (CPU) and a flash memory, having functions for processing information. These electronic components are incorporated in a main body of the information disclosure management server 1.

The key management server 2 is an information processing device of a server type. The key management server 2 particularly stores and manages a cryptographic key (a secret key) for electronic signature, and affixes an electronic signature to data to be broadcast. The key management server 2 operates in accordance with an instruction from the terminal 3c. The key management server 2 includes electronic components, such as a CPU and a flash memory, having functions for processing information. These electronic components are incorporated in a main body of the key management server 2. The secret key is not necessarily managed using the key management server 2. For example, a hardware wallet may be used instead of the key management server 2.

Each of the terminals 3a, 3b, and 3c is an information processing device such as a personal computer (PC) or a smartphone. Each of the terminals 3a, 3b, and 3c includes electronic components, such as a CPU and a flash memory, having functions for processing information. These electronic components are incorporated in a main body of a corresponding one of the terminals 3a, 3b, and 3c.

The blockchain 4 is a platform using a blockchain technology. Examples of the blockchain technology may include, but not limited to, Ethereum, Bitcoin, and NEM. However, the present invention is not limited to a blockchain as long as a history of transactions is managed in a distributed manner. For example, a platform using a distributed ledger technology may be used. Examples of data to be broadcast to the blockchain 4 may include, but not limited to, remittance of virtual currency, exchange of virtual currency (which indicates virtual currency transactions on Uniswap; or exchanges), approval for remittance of virtual currency, withdrawal of virtual currency (withdrawal of proceeds or by AirDrop), minting and burning of NFT, transfer of NFT, approval for transfer of NFT, execution of various transactions for a smart contract, deployment of a smart contract, execution of a method, and various kinds of signature (e.g., login using a signature). A disclosure target may include other kinds of data that can be handled in the blockchain 4. An act of disclosure may include other methods for processing data that can be handled in the blockchain 4.

The network 5 is a communication network that enables high-speed communications. Examples of the network 5 may include, but not limited to, the Internet and other wired or wireless communication networks such as an intranet and a local area network (LAN).

For example, the information disclosure management server 1 operates in accordance with an instruction from each of the terminal 3a, the terminal 3b, the terminal 3c, and the key management server 2. The information disclosure management server 1 allows the approver 6b to approve broadcast transmission of disclosure data prepared by the applicant 6a, to the blockchain 4 prior to the broadcast transmission in compliance with a rule set in advance. When the approver 6b approves the broadcast transmission, the information disclosure management server 1 allows the executer 6c to broadcast the disclosure data. After the approval, the executer 6c affixes a signature to the disclosure data through the key management server 2 prior to the broadcast transmission. Alternatively, the executer 6c may affix the signature before the approval. A specific description will be given below.

### (Configuration of information processing device)

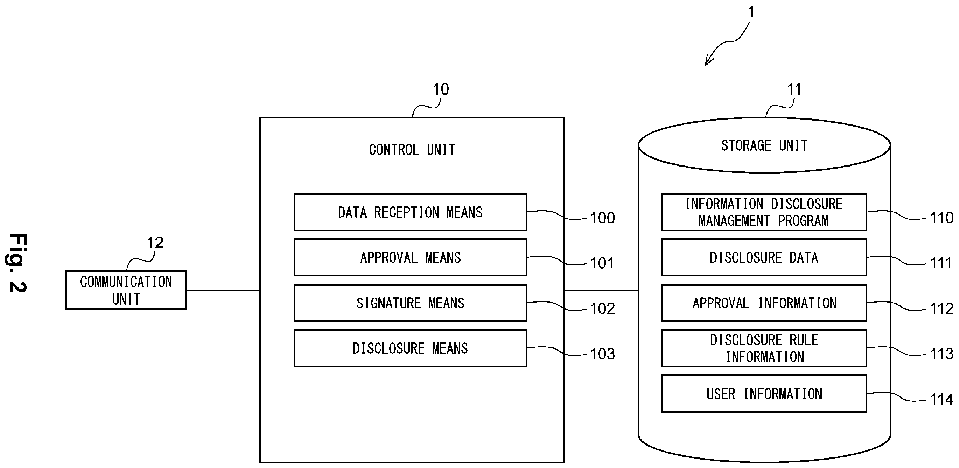

Fig. 2 is a block diagram illustrating a configuration example of the information disclosure management server 1 according to the embodiment.

The information disclosure management server 1 includes a control unit 10, a storage unit 11, and a communication unit 12. The control unit 10 is constituted of a CPU and the like, controls the respective units, and executes various programs. The storage unit 11 is constituted of a storage medium such as a flash memory, and stores information. The communication unit 12 communicates with the outside via a network.

The control unit 10 executes an information disclosure management program 110 (to be described later) to thereby function as, for example, data reception means 100, approval means 101, signature means 102, and disclosure means 103.

The data reception means 100 receives application data from the terminal 3a via the network 5, and stores the application data as disclosure data 111 in the storage unit 11.

The approval means 101 requests the terminal 3b to approve broadcast transmission of the disclosure data 111 based on disclosure rule information 113 including disclosure rules set in advance. When receiving the approval from the terminal 3b, then, the approval means 101 stores the content of the approval as approval information 112 in the storage unit 11. The approval means 101 may be configured to also handle a case where the approval is unnecessary, that is, a case where the approval means 101 does not request the terminal 3b to approve the broadcast transmission.

The signature means 102 requests the terminal 3c to affix a signature to the disclosure data 111. The signature means 102 then receives from the terminal 3c the disclosure data 111 to which the signature has been affixed, and updates the disclosure data 111 stored in the storage unit 11.

The disclosure means 103 receives a request of the broadcast transmission of the disclosure data 111 from the terminal 3c, and determines whether the contents of disclosure data 111, the approval information 112, and user information 114 comply with the rule in the disclosure rule information 113. When the contents comply with the rule, the disclosure means 103 broadcasts the disclosure data 111 to the blockchain 4. The user information 114 is information about a user.

The storage unit 11 stores the information disclosure management program 110 which is an example of an information processing program for causing the control unit 10 to function as the foregoing data reception means 100, approval means 101, signature means 102, and disclosure means 103. The storage unit 11 also stores the disclosure data 111, the approval information 112, the disclosure rule information 113, the user information 114, and the like.

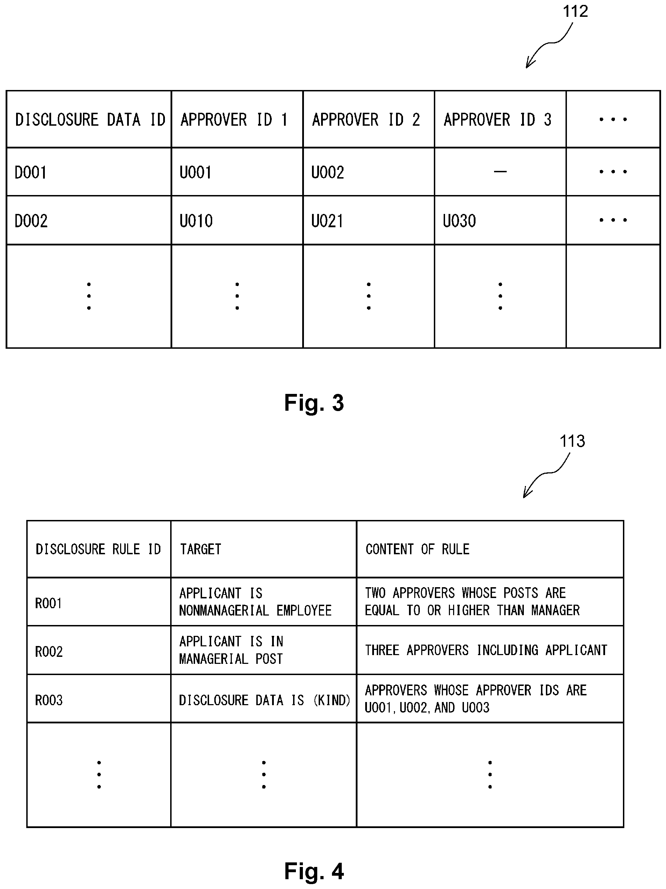

Fig. 3 is a schematic diagram illustrating a configuration example of the approval information 112.

The approval information 112 includes a disclosure data ID for identifying disclosure data, and an approver ID 1, an approver ID 2, an approver ID 3, ... each of which is a user ID of an approver who has approved broadcast transmission of the disclosure data.

Fig. 4 is a schematic diagram illustrating a configuration example of the disclosure rule information 113.

The disclosure rule information 113 includes a disclosure rule ID for identifying a disclosure rule, a target to which a rule is applied, and the content of the rule. Examples of the target to which the rule is applied may include, but not limited to, a user, data to be broadcast, a time (e.g., a time of day, a time zone) at which data is broadcast, a source from which data is broadcast, a destination to which data is broadcast, and a method of broadcasting data. Examples of the content of the rule may include, but not limited to, a user's post, a user ID, and any information to be obtained from the user information 114.

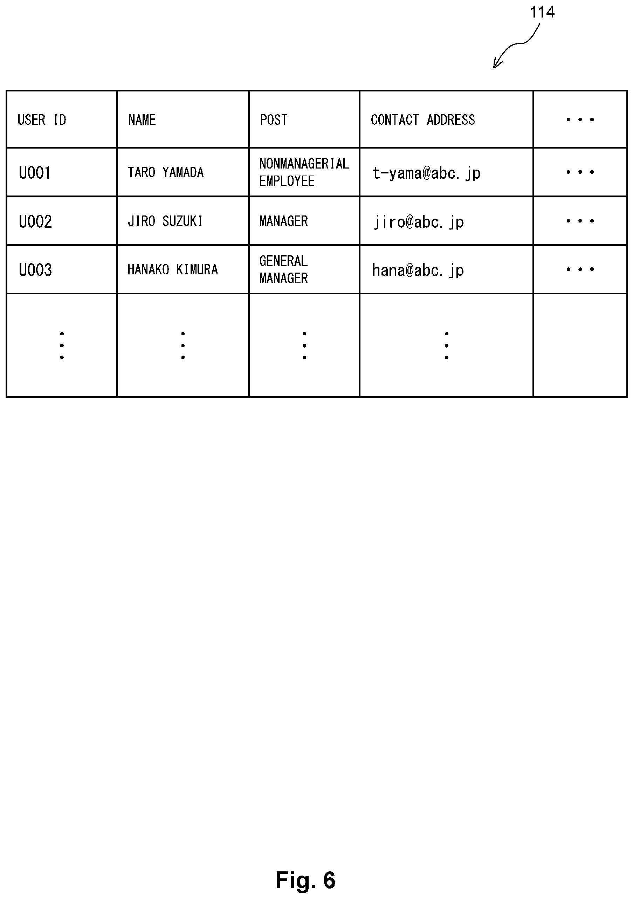

Fig. 6 is a schematic diagram illustrating a configuration example of the user information 114.

The user information 114 includes a user ID for identifying a user, a user's name, a user's post, and a user's contact address (e.g., an e-mail address). The user information 114 may further include information about a user required for approval, signature, and disclosure. Examples of such information may include, but not limited to, information about an address, a telephone number, an SNS account, a department to which a user belongs, a division to which a user belongs, an IP address, a wallet address, a public key, and a private key.

### (Operation of information processing device)

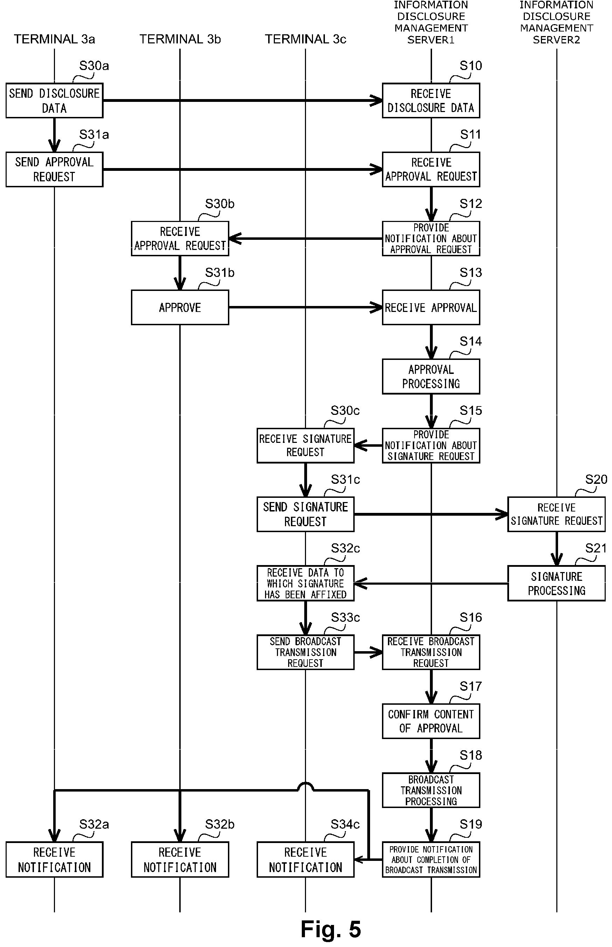

Next, a description will be given of the action according to the embodiment by dividing the action into three operations, (1) application, (2) approval, and (3) disclosure. Fig. 5 is a flowchart illustrating an operation example according to the embodiment.

### (1) Application

As preparations for starting up the information processing system, first, an administrator (not illustrated) accesses the information disclosure management server 1 through his/her terminal. The administrator then sets a target and a rule for disclosure data, and previously registers the target and the rule as disclosure rule information 113 as illustrated in Fig. 4. The target designates, for example, a user, a characteristic of a user, disclosure data, and an attribute of disclosure data. The content of the rule designates a user and a characteristic of a user. Alternatively, the content of the rule may designate, for example, disclosure data and an attribute of disclosure data.

After the registration of the disclosure rule information 113, the applicant 6a manipulates the terminal 3a to upload disclosure data to the information disclosure management server 1. The terminal 3a sends the disclosure data to the information disclosure management server 1 in response to the manipulation (S30a).

The data reception means 100 of the information disclosure management server 1 receives the application data from the terminal 3a via the network 5, and stores the application data as disclosure data 111 in the storage unit 11 (S10).

### (2) Approval

Next, the applicant 6a manipulates the terminal 3a to obtain approval for broadcast transmission of the application data. The terminal 3a sends an approval request to the information disclosure management server 1 in response to the manipulation (S31a).

When receiving the approval request (S11), the approval means 101 of the information disclosure management server 1 refers to the disclosure rule information 113, specifies the approver 6b, and notifies the terminal 3b of the approval request from the applicant 6a for broadcasting the disclosure data 111 (S12). At this time, the approval means 101 may allow the approver 6b to view the content of the disclosure data 111 through the terminal 3b. Alternatively, the approval means 101 may permit the approver 6b to partially view the content of the disclosure data 111 or prohibit the approver 6b from viewing the content of the disclosure data 111 in a selective manner in accordance with a predetermined authority level. In addition, the approval means 101 may automatically notify the terminal 3b of an approval request after receiving the disclosure data even when the terminal 3a sends no approval request.

When receiving the approval request from the information disclosure management server 1 (S30b), the terminal 3b displays the approval request on, for example, a display unit thereof. The approver 6b confirms the content of the approval request displayed on the display unit of the terminal 3b, and confirms the content of the disclosure data 111 if necessary. When there is no problem, the approver 6b manipulates the terminal 3b to approve for the broadcast transmission of the disclosure data 111. The terminal 3b sends the approval in response to the manipulation (S31b). The approver 6b grants the approval by, for example, pressing a button on a display screen or pressing a button on a chat service such as an e-mail, Slack, or Discord which is an interfacing external system.

The approval means 101 of the information disclosure management server 1 receives the approval from the terminal 3b (i.e., the approver 6b) (S13). The approval means 101 then associates the ID of the user who has granted the approval with the ID of the disclosure data, and stores the associated IDs as approval information 112 in the storage unit 11 as illustrated in Fig. 3 (S14).

### (3) Disclosure

Next, the signature means 102 of the information disclosure management server 1 refers to user information (not illustrated), specifies the executer 6c, and sends a signature request for the disclosure data 111 to the terminal 3c (S15). The executer 6c may be a user previously associated with the applicant 6a in the user information. Alternatively, the executer 6c may be a user defined as an executer in the disclosure rule information 113.

When receiving the signature request together with the disclosure data 111 from the information disclosure management server 1 (S30c), the terminal 3c displays the signature request on, for example, a display unit thereof. The terminal 3c may display a list of the user who has granted the approval, in addition to the signature request. The executer 6c confirms the content of the signature request displayed on the display unit of the terminal 3c. When there is no problem, the executer 6c manipulates the terminal 3c in order to affix a signature to the disclosure data 111. The terminal 3c sends the signature request together with the disclosure data 111 to the key management server 2 in response to the manipulation (S31c).

The key management server 2 receives the signature request together with the disclosure data 111 (S20). The key management server 2 then performs signature processing by encrypting information corresponding to the disclosure data 111 subjected to hashing with a managed private key, and sends to the terminal 3c the disclosure data 111 to which the signature has been affixed (S21). It should be noted that the key management server 2 may directly receive the disclosure data 111 from the information disclosure management server 1 without via the terminal 3c, perform the signature processing on the disclosure data 111, based on the signature request from the terminal 3c, and send to the information disclosure management server 1 the disclosure data 111 to which the signature has been affixed.

Next, the terminal 3c receives the disclosure data 111 to which the signature has been affixed (S32c). Next, the terminal 3c requests the information disclosure management server 1 to broadcast the disclosure data 111 to which the signature has been affixed, based on the manipulation by the executer 6a (S33c).

The disclosure means 103 of the information disclosure management server 1 receives the broadcast transmission request from the terminal 3c (S16). The disclosure means 103 then refers to the user information 114 illustrated in Fig. 6, and confirms the content of the approval by determining whether the content of the approval information 112 illustrated in Fig. 3 complies with the rule in the disclosure rule information 113 defined in Fig. 4 and/or whether the signature is affixed to the disclosure data 111 to be broadcast (S17). When the content of the approval information 112 complies with the rule in the disclosure rule information 113, the disclosure means 103 broadcasts the disclosure data 111 to the blockchain 4 (S18) .

As an example, the disclosure means 103 confirms the user information 114 to determine whether the applicant is a nonmanagerial employee. When the applicant is a nonmanagerial employee, the disclosure means 103 determines that the applicant's user ID complies with a disclosure rule ID "R001" illustrated in Fig. 4. The disclosure means 103 then determines whether there are two users who have approver IDs in the approval information 112 and whose posts are equal to or higher than a manager. When there are two users who have the approver IDs and whose posts are equal to or higher than a manager, the disclosure means 103 determines that the content of the approval information 112 complies with the rule in the disclosure rule information 113. The disclosure means 103 may determine that the content of the approval information 112 complies with the rule in the disclosure rule information 113 on a condition that there are two or more users who have the approver IDs and whose posts are equal to or higher than a manager. As another example, the disclosure means 103 confirms the user information 114 to determine whether the applicant is in a managerial post. When the applicant is in a managerial post, the disclosure means 103 determines that the applicant's user ID complies with a disclosure rule ID "R002" illustrated in Fig. 4. The disclosure means 103 then determines whether there are three users who have approver IDs in the approval information 112 and one of who is the applicant. When there are three users who have the approver IDs and one of who is the applicant, the disclosure means 103 determines that the content of the approval information 112 complies with the rule in the disclosure rule information 113. The disclosure means 103 may determine that the content of the approval information 112 complies with the rule in the disclosure rule information 113 on a condition that there are three or more users who have the approver IDs and one of who is the applicant. As still another example, when the data to be broadcast is predetermined data, the disclosure means 103 determines that the data has a disclosure rule ID "R003" illustrated in Fig. 4. The disclosure means 103 then determines whether the approval information 112 includes user IDs "U001", "U002", and "U003" as approver IDs. When the approval information 112 includes the user IDs "U001", "U002", and "U003", the disclosure means 103 determines that the content of the approval information 112 complies with the rule in the disclosure rule information 113.

After completion of the broadcast transmission, the disclosure means 103 of the information disclosure management server 1 notifies the terminals 3a, 3b, 3c of the completion (S19).

The terminals 3a, 3b, 3c each receive the notification (S32a, S32b, S34c) and display the content of the notification on the display unit. The applicant 6a, the approver 6b, and the executer 6c each confirm the notification displayed on the display unit of his/her terminal and then end the processing.

### (Advantageous effect of embodiment)

According to the foregoing embodiment, in broadcasting the disclosure data 111, it is determined whether the content of the approval information 112 satisfies the condition of the disclosure rule information 113. Only in the case where the condition is satisfied, the disclosure data 111 is broadcast. It is therefore possible to obtain agreement on broadcast transmission prior to the broadcast transmission.

### [Other Embodiments]

It should be noted that the present invention is not limited to the foregoing embodiment, and various modifications can be made without departing from the scope of the present invention.

In the foregoing description, the information processing device 1, the key management server 2, the terminals 3a, 3b, and 3c, and the blockchain 4 are provided using different devices. Alternatively, a single device may exert the functions of these devices in any combination without departing from the scope of the present invention. Still alternatively, a plurality of devices may exert the functions of these devices in a distributed manner.

The information disclosure management program 100 may be provided through an application programming interface (API), and the approval request from the information disclosure management server 1 may be sent to an external system. Examples of the external system may include, but not limited to, chat services such as an e-mail, Slack, and Discord.

The applicant 6a, the approver 6b, and the executer 6c may be identical to each other. In addition, the approver 6b and the executer 6c may be identical to each other. For example, the applicant 6a, the approver 6b, and the executer 6c are identical to each other in a case where this system is put to trial for the first time. Furthermore, the approver 6b and the executer 6c are identical to each other in a case where an engineer team leader serves as an administrator and an executer.

In the foregoing embodiment, the approval is given before the signature is affixed. Alternatively, the approval may be given after the signature is affixed.

In the foregoing embodiment, the control unit 10 executes the program to function as the data reception means 100, the approval means 101, the signature means 102, and the disclosure means 103. Alternatively, at least one of or all the data reception means 100, the approval means 101, the signature means 102, and the disclosure means 103 may be achieved using hardware such as an ASIC. The program used in the foregoing embodiment may be provided in such a manner that the program is stored in a recording medium such as a CD-ROM. Replacement, deletion, addition, and other operations for the steps described in the foregoing embodiment can be made without departing from the scope of the present invention.

### Industrial Applicability

An information processing program and an information processing device for obtaining agreement on broadcast transmission prior to the broadcast transmission are provided.

### Reference Signs List

- 1:: Information disclosure management server
- 2:: Key management server
- 3a, 3b, 3c:: Terminal
- 4:: Blockchain
- 5:: Network
- 6a:: Applicant
- 6b:: Approver
- 6c:: Executer
- 10:: Control unit
- 11:: Storage unit
- 12:: Communication unit
- 100:: Data reception means
- 101:: Approval means
- 102:: Signature means
- 103:: Disclosure means
- 110:: Information disclosure management program
- 111:: Disclosure data
- 112:: Approval information
- 113:: Disclosure rule information
- 114:: User information

FIG. 1
   - 6a: APPLICANT
   - 6b: APPROVER
   - 6c: EXECUTER
   - 3a: TERMINAL
   - 1: INFORMATION DISCLOSURE MANAGEMENT SERVER
   - 2: KEY MANAGEMENT SERVER
   - 4: BLOCKCHAIN
FIG. 2
   - 12: COMMUNICATION UNIT
   - 10: CONTROL UNIT
   - 100: DATA RECEPTION MEANS
   - 101: APPROVAL MEANS
   - 102: SIGNATURE MEANS
   - 103: DISCLOSURE MEANS
   - 11: STORAGE UNIT
   - 110: INFORMATION DISCLOSURE MANAGEMENT PROGRAM
   - 111: DISCLOSURE DATA
   - 112: APPROVAL INFORMATION
   - 113: DISCLOSURE RULE INFORMATION
   - 114: USER INFORMATION
FIG. 3
   DISCLOSURE DATA ID
   APPROVER ID 1
FIG. 4
   DISCLOSURE RULE ID
   TARGET
   APPLICANT IS NONMANAGERIAL EMPLOYEE
   APPLICANT IS IN MANAGERIAL POST
   DISCLOSURE DATA IS (KIND)
   CONTENT OF RULE
   TWO APPROVERS WHOSE POSTS ARE EQUAL TO OR HIGHER THAN MANAGER
   THREE APPROVERS INCLUDING APPLICANT
   APPROVERS WHOSE APPROVER IDS ARE U001, U002, AND U003
FIG. 5
   TERMINAL
   - S30a: SEND DISCLOSURE DATA
   - S31a: SEND APPROVAL REQUEST
   - S32a: RECEIVE NOTIFICATION
   - S30b: RECEIVE APPROVAL REQUEST
   - S31b: APPROVE
   - S32b: RECEIVE NOTIFICATION
   - S30c: RECEIVE SIGNATURE REQUEST
   - S31c: SEND SIGNATURE REQUEST
   - S32c: RECEIVE DATA TO WHICH SIGNATURE HAS BEEN AFFIXED
   - S33c: SEND BROADCAST TRANSMISSION REQUEST
   - S34c: RECEIVE NOTIFICATION INFORMATION DISCLOSURE MANAGEMENT SERVER
   - S10: RECEIVE DISCLOSURE DATA
   - S11: RECEIVE APPROVAL REQUEST
   - S12: PROVIDE NOTIFICATION ABOUT APPROVAL REQUEST
   - S13: RECEIVE APPROVAL
   - S14: APPROVAL PROCESSING
   - S15: PROVIDE NOTIFICATION ABOUT SIGNATURE REQUEST
   - S16: RECEIVE BROADCAST TRANSMISSION REQUEST
   - S17: CONFIRM CONTENT OF APPROVAL
   - S18: BROADCAST TRANSMISSION PROCESSING
   - S19: PROVIDE NOTIFICATION ABOUT COMPLETION OF BROADCAST TRANSMISSION
   - S20: RECEIVE SIGNATURE REQUEST
   - S21: SIGNATURE PROCESSING
FIG. 6
   USER ID
   NAME
   TARO YAMADA
   JIRO SUZUKI
   HANAKO KIMURA
   POST
   NONMANAGERIAL EMPLOYEE
   MANAGER
   GENERAL MANAGER
   CONTACT ADDRESS

## Claims

1. An information disclosure management program for causing a computer to function as:
reception means for receiving, from a first user, data to be broadcast;
approval means for receiving, from one or more second users, approval for broadcast transmission of the data; and
disclosure means for determining, in response to a disclosure request received from a third user, whether the one or more second users who have approved the broadcast transmission satisfy a predetermined condition, and broadcasting the data when the predetermined condition is satisfied.

2. The information disclosure management program according to claim 1, causing the computer to further function as signature means for requesting the third user to affix a signature to the data and receiving, from the third user, the data to which the signature has been affixed.

3. The information disclosure management program according to claim 1 or 2, wherein the first user, the one or more second users, and the third user are identical to each other.

4. The information disclosure management program according to claim 1 or 2, wherein the one or more second users and the third user are identical to each other.

5. An information disclosure management device comprising:
reception means for receiving, from a first user, data to be broadcast;
approval means for receiving, from one or more second users, approval for broadcast transmission of the data; and
disclosure means for determining, in response to a disclosure request received from a third user, whether the one or more second users who have approved the broadcast transmission satisfy a predetermined condition, and broadcasting the data when the predetermined condition is satisfied.

6. An information disclosure management system comprising:
a first terminal to be operated by a first user;
one or more second terminals to be operated by one or more second users;
a third terminal to be operated by a third user; and
an information disclosure management device including
reception means for receiving, from the first user, data to be broadcast,
approval means for receiving, from the one or more second users, approval for broadcast transmission of the data, and
disclosure means for determining, in response to a disclosure request received from the third user, whether the one or more second users who have approved the broadcast transmission satisfy a predetermined condition, and broadcasting the data when the predetermined condition is satisfied.
